# EUROPÄISCHE PATENTSCHRIFT

(11) **EP 3 668 698 B1**
(45) Veröffentlichungstag und Bekanntmachung des Hinweises auf die Patenterteilung: **07.07.2021**
(21) Anmeldenummer: 18772713.6
(22) Anmeldetag: 13.08.2018
(51) Int. Cl.: B29C 49/46, B29C 49/18, B29C 49/24, B29C 49/26, B29C 49/04, B29C 49/42, B29C 49/78

(54) **VERFAHREN ZUR HERSTELLUNG EINES BAUTEILS AUS EINER ALS HOHLKÖRPER AUSGEBILDETEN PREFORM**
METHOD FOR PRODUCING A COMPONENT FROM A PREFORM DESIGNED AS A HOLLOW BODY
PROCÉDÉ POUR FABRIQUER UNE PIÈCE À PARTIR D'UNE PRÉFORME RÉALISÉE SOUS LA FORME D'UN CORPS CREUX

(30) Priorität: 17.08.2017 DE 102017118826
(43) Veröffentlichungstag der Anmeldung: 24.06.2020
(73) Patentinhaber: PME fluidtec GmbH, 88677 Markdorf (DE)
(72) Erfinder: WESTPHAL Fredrich, 79361 Sasbach (DE)
(74) Vertreter: Geitz Truckenmüller Lucht Christ
(86) Internationale Anmeldenummer: PCT/DE2018/100709
(87) Internationale Veröffentlichungsnummer: WO 2019/034208

(56) Entgegenhaltungen:
- DE-A1-102006 049 415
- DE-A1-102007 015 216
- DE-A1-102015 008 561
- DE-B3-102009 001 276

## Beschreibung

Die Erfindung geht aus von einem Verfahren zur Herstellung eines Bauteils aus einer als formstabilen Hohlkörper ausgebildeten Preform, welche mindestens eine Öffnung aufweist.

Verfahren zur Herstellung eines Bauteils aus einer Preform sind beispielsweise aus den Bereichen Extrusionsblasformen und Streckblasformen, auch genannt Blow Molding, bekannt. Die Preform wird auch als Vorformling bezeichnet. Bei den genannten Verfahren wird eine vorgefertigte und formstabile Preform aus thermoplastischem Kunststoff in ein Blasformwerkzeug eingebracht, erwärmt und unter Einwirkung von Druckluft zu dem gewünschten Bauteil ausgeformt. Zusätzlich kann ein Dorn in die erwärmte Preform eingeführt werden, wodurch die Preform mechanisch in der Länge gestreckt wird. Druck und Temperatur derartiger Verfahren hängen ab vom verwendeten Kunststoff und der Form des Bauteils. Ein typischer Druckbereich liegt zwischen 7 und 40 bar. Ein typischer Temperaturbereich liegt zwischen 80 und 120°C. Blasform-Verfahren eignen sich zur Herstellung relativ dünnwandiger Bauteile insbesondere aus PET, PBT, PVC, PP und PA. Hierzu zählen Behälter wie beispielsweise Flaschen, Ampullen oder Tanks. Bekannte Blasform-Verfahren sind jedoch nicht geeignet, um Bauteile aus Preformen herzustellen, bei denen aufgrund des Kunststoffmaterials oder der Form des Bauteils wesentlich höhere Drücke notwendig sind um das Bauteil aus der formstabilen Preform auszuformen.

Aus der DE 10 2015 008 561 A1 ist ein Verfahren zur Herstellung eines im Inneren mindestens einen Hohlraum aufweisenden Kunststoffrahmens für ein Zweirad mittels Kunststoffspritzguss bekannt. Das Verfahren sieht vor, dass eine thermoplastische Kunststoffschmelze in ein geschlossenes Spritzgusswerkzeug eingespritzt wird, dass mindestens ein Fluid zur Verdrängung der plastischen Seele aus der Bauteilkavität injiziert wird und dass der Fluiddruck im Bauteilinneren zumindest kurz aufrechterhalten wird. Vor dem Einspritzen der Kunststoffschmelze können eine Design- und/ oder Funktionsfolie, ein Tape oder Organoblech aus Kohle- oder Glasfasergewebe oder zu integrierende Funktionsteile wie Tretlager, Lenkköpfe oder Bremsleitungen in das Werkzeug eingelegt werden. Diese Bauteile werden anschließend mit der Kunststoffschmelze umspritzt. Sie werden dabei nicht gezielt verformt. In der Druckschrift ist nicht offenbart, dass eine vorgefertigte und formstabile Preform in den Formhohlraum eines Werkzeugs eingelegt und diese gezielt durch das Einspritzen einer Kunststoffschmelze verformt wird.

Aus der DE 10 2007 015216 A1 ist eine Vorrichtung zur Herstellung eines Hohlkörpers aus mindestens zwei Schichten Kunststoff mit einer Spritzgießform bekannt, welche mit einer Spritzgießmaschine verbindbar ist. Die Spritzgießform weist eine Haupt- und mindestens eine Nebenkavität auf. Zwischen der Haupt- und der Nebenkavität ist ein Sperrschieber vorgesehen. In der Nebenkavität ist ein Konturschieber angeordnet. Darüber hinaus sind zwei Einlässe zum Einleiten einer ersten und einer zweiten Kunststoffschmelze in die Spritzgießform und ein Fluid-Injektor zum Einleiten eines Fluids zum Verdrängen der Kunststoffschmelzen in der Spritzgießform vorgesehen. Das Einlegen einer Preform in das Werkzeug sowie eine gezielte Umforung einer Preform sind in der Druckschrift nicht offenbart.

Schließlich ist aus der DE 10 2009 001276 B3 ein Verfahren zur Herstellung eines Kunststoffteils mit einem Hohlraum bekannt. Das Verfahren sieht vor, dass eine Menge geschmolzener Kunststoff innerhalb einer Kavität bereitgestellt wird und dass ein Fluid in die Kavität zur Ausbildung eines Hohlraums eingebracht wird. Das Einlegen einer Preform in das Werkzeug sowie eine gezielte Umforung einer Preform sind in der Druckschrift nicht offenbart.

Der vorliegenden Erfindung liegt die Aufgabe zugrunde, ein Verfahren zur Verfügung zu stellen, das die Herstellung eines Bauteils aus einer vorgefertigten und formstabilen Preform auch dann ermöglicht, wenn deutlich höhere Drücke als bei Blasform-Verfahren notwendig sind, um einen Übergang der Preform in die Form des Bauteils und dabei eine Verformung der Preform zu erzwingen.

Die Aufgabe wird durch ein Verfahren gemäß Anspruch 1 gelöst. Das Verfahren zeichnet sich dadurch aus, dass in die vorgefertigte und formstabile Preform eine flüssige Kunststoffformmasse eingespritzt und mittels der Fluidinjektionstechnik ein Hohlraum in der Kunststoffformmasse ausgeformt wird. Die Verformung der Preform wird damit nicht wie bei bekannten Blasform-Verfahren allein durch Erwärmung und durch das Einleiten von Druckluft erreicht sondern durch das Einspritzen einer Kunststoffschmelze in die Preform. Die Preform ist als Hohlkörper ausgebildet und weist einen Preform-Hohlraum auf. Beim Einspritzen der flüssigen Kunststoffformmasse in den Preform-Hohlraum und/ oder beim Einspritzen eines Fluids in die flüssige Kunststoffformmasse wird im Inneren der Preform ein Druck aufgebaut, der deutlich höher ist als die aus den bekannten Blasform-Verfahren bekannten Drücke. Mit diesem hohen Druck können auch Preformen zu Bauteilen umgeformt werden, die eine hohe Formstabilität aufweisen, so dass große Kräfte notwendig sind, um die Preform zu verformen. Sie können beispielsweise mit einer Verstärkungsstruktur ausgestattet sein. Gemäß dem erfindungsgemäßen Verfahren wird die vorgefertigte und formstabile Preform in den Formhohlraum eines mit einem ersten Kunststoff-Injektor ausgestatteten Formwerkzeugs einer Kunststoffspritzgießmaschine eingelegt. Dabei definiert die innere Kontur des Formhohlraums im wesentlichen die äußere Kontur des herzustellenden Bauteils. Die Preform wird in dem Formhohlraum derart mit ihrer mindestens einen Öffnung ausgerichtet, dass die Öffnung der Preform an der Position des ersten Kunststoff-Injektors in dem Formwerkzeug angeordnet ist. Nach dem Schließen des Formwerkzeugs wird eine flüssige Kunststoffformmasse eines ersten Kunststoffs mittels des ersten Kunststoff-Injektors in den Preform-Hohlraum injiziert. Die flüssige Kunststoffformmasse dringt dabei durch die dem ersten Kunststoff-Injektor zugewandte Öffnung der Preform in den Preform-Hohlraum ein. Bereits beim Einspritzen der flüssigen Kunststoffmasse in die Preform kann sich diese derart gezielt verformen, dass sie die durch den Formhohlraum des Formwerkzeugs vorgegebene äußere Kontur annimmt. In die flüssige Kunststoffformmasse wird ein erstes Fluid unter Druck injiziert, wobei sich in der Kunststoffformmasse ein Hohlraum durch Verdrängung der Kunststoffformmasse des ersten Kunststoffs ausbildet. Ein zweites Fluid wird unter Druck in den Hohlraum injiziert, wobei das erste Fluid aus dem Hohlraum verdrängt wird. Unter Einwirkung der Temperatur und/ oder des Drucks, die die Kunststoffformmasse und/ oder das erste Fluid und/ oder das zweite Fluid auf die Preform ausüben, geht die Preform in das Bauteil über und nimmt dessen durch den Formhohlraum vorgegebene Kontur des Bauteils an. Nach dem Erstarren der Kunststoffformmasse wird das Bauteil aus dem Formhohlraum entformt.

Das erste und zweite Fluid können auch als Mischung in Form eines Nebels oder Aerosol vorliegen und in die Kunststoffschmelze eingespritzt werden. Wird ein Aerosol bei der Injektionstechnik eingesetzt, wird dies als Aerosol-Injektionstechnik bezeichnet. Wird als Gas CO₂ eingesetzt wird dies als CO₂-Injketionstechnik bezeichnet.

Durch das Einleiten eines ersten Fluids unter Druck in die als Kunststoffschmelze vorliegende Kunststoffformmasse wird ein Teil der Kunststoffformmasse des ersten Kunststoffs aus der Preform herausgedrückt. Gleichzeitig wird ein Hohlraum in der Kunststoffformmasse ausgebildet. Als Fluid wird entweder eine Flüssigkeit oder ein Gas eingesetzt. Verfahren, bei denen als Flüssigkeit Wasser verwendet wird, werden als Verfahren der Wasserinjektionstechnik bezeichnet. Verfahren, bei denen ein Gas eingesetzt wird, werden als Verfahren der Gasinjektionstechnik bezeichnet. Nach der Abkühlung des Bauteils auf eine vorgegebene Temperatur wird das Formwerkzeug geöffnet und das Bauteil entnommen. Anschließend kann das nächste Bauteil hergestellt werden. Der Zyklus beginnt erneut mit dem Befüllen des Formhohlraums mit einer Preform.

Durch die Erzeugung eines Hohlraums in der Kunststoffformmasse des ersten Kunststoffs wird vermieden, dass das fertige Bauteil in Inneren vollständig mit Kunststoff ausgefüllt ist. Durch das Einspritzen der Kunststoffschmelze des ersten Kunststoffs wird die Preform derart verformt, dass ihre äußere Form im wesentlichen die Form des fertigen Bauteils annimmt. Durch das anschließende Einleiten eines ersten Fluids wird im Inneren des Bauteils ein Hohlraum erzeugt, so dass das fertige Bauteil als Hohlkörper ausgebildet ist. Sofern aus der Preform ein massives Bauteil hergestellt werden soll, das vollständig mit dem ersten Kunststoff ausgefüllt ist, kann das Einleiten des ersten und zweiten Fluids entfallen.

Beim Injizieren der Kunststoffformmasse in die Preform kann der Preform-Hohlraum teilweise oder vollständig mit Kunststoffformmasse gefüllt werden. Bevorzugt wird der Preform-Hohlraum beim Injizieren vollständig mit Kunststoffformmasse ausgefüllt und dabei der für die Verformung der Preform notwendige Druck aufgebaut. Beim Einleiten des ersten Fluids wird dafür Sorge getragen, dass ein Teil der Kunststoffformmasse aus dem Preform-Hohlraum der Preform herausgedrückt werden kann. Hierzu weist die Preform bevorzugt eine weitere Öffnung auf, durch die überschüssige Kunststoffformmasse des ersten Kunststoffs die Preform verlassen kann. Die erste Öffnung der Preform dient dabei als Einlassöffnung für die Kunststoffformmasse und die weitere Öffnung der Preform dient als Auslassöffnung für die überschüssige Kunststoffformmasse. Das Formwerkzeug ist in diesem Fall ebenfalls speziell ausgestaltet, um die überschüssige Kunststoffformmasse abzuführen. Die überschüssige Kunststoffformmasse kann beispielsweise zu dem Kunststoff-Injektor zurückgeführt werden, damit sie für einen weiteren Zyklus zur Verfügung steht. Derartige Verfahren werden als Masserückdrückverfahren bezeichnet. Sind keine großen Drücke oder Temperaturen notwendig, um die Preform zu verformen, so kann es ausreichend sein, den Preform-Hohlraum beim Einspritzen einer Kunststoffformmasse nur teilweise zu füllen. In diesem Fall sorgt das erste Fluid für eine Verteilung der Kunststoffformmasse in dem Preform-Hohlraum.

Insbesondere beim Einspritzen der Kunststoffmasse und/ oder bei der Verdrängung der Kunststoffformmasse durch das erste Fluid entstehen derart hohe Drücke, dass eine gezielte Verformung der Preform auch dann ausgelöst wird, wenn die Preform eine hohe Formstabilität aufweist. Das Einleiten der Kunststoffformmasse und/ oder des ersten Fluids dient in erster Linie dem Druckaufbau. Die Kunststoffformmasse kann jedoch auch zusätzlich dazu dienen, das Bauteil auszugestalten und zusätzliche Komponenten an die Preform anzuformen.

Der insbesondere beim Einspritzen der flüssigen Kunststoffschmelze des ersten Kunststoffs aufgebaute Druck kann um ein Vielfaches höher sein, als der Druck, der üblicherweise beim Blow Molding eingesetzt wird.

Das fertige Bauteil weist zusätzlich zu dem Material der Preform an seiner den Hohlraum begrenzenden Innenseite eine Schicht aus dem ersten Kunststoff auf. Dies kann bei der Herstellung der Preform berücksichtigt werden. Die Wandstärke der vorgefertigten Preform kann entsprechend reduziert werden.

Die Außenseite des fertigen Bauteils wird mit Ausnahme von eventuell zusätzlich angespritzten Komponenten durch die gezielt verformte Preform gebildet.

Das Einleiten des ersten und des zweiten Fluids kann so gestaltet werden, dass sich die Kunststoffformmasse gleichmäßig verteilt. Darüber hinaus kann das Einleiten des ersten und zweiten Fluids auch gezielt so erfolgen, dass sich die Kunststoffformmasse insbesondere an den Positionen der Preform anlagert, an denen aufgrund der Ausformung zum Bauteil eine Materialschwächung eintritt. Wird die Dicke der Wand der Preform bei der Ausformung abschnittsweise reduziert, so kann genau in diesem Abschnitt mehr Kunststoffformmasse des ersten Kunststoffs platziert werden, als in den übrigen Abschnitten.

Mit dem erfindungsgemäßen Verfahren kann an einer Preform, die eine zylindrische, längliche Form aufweist, in einem oder in mehreren Abschnitten der Durchmesser vergrößert werden und damit die äußere Kontur aufgeweitet werden. Das Bauteil weist dann Abschnitte mit unterschiedlich großen Querschnitten auf.

Führt die Ausformung der Preform zu dem Bauteil insbesondere aufgrund einer abschnittsweisen Aufweitung zu einer Längenkontraktion, so kann das Formwerkzeug mit verschiebbar gelagerten Abschnitten ausgestattet sein. Auf diese Weise kann das Formwerkzeug der Längenkontraktion der Preform folgen.

Mit dem erfindungsgemäßen Verfahren können beispielsweise Medien führende Leitungen hergestellt werden. Derartige Leitungen führen als Medien Flüssigkeiten oder Gase, insbesondere Wasser, Öl oder Luft. Je nach Einsatzgebiet müssen diese Leitungen besonderes stabil sein und in verschiedenen Abschnitten unterschiedliche Querschnitte aufweisen. Die hohe Stabilität wird durch den Einsatz einer geeigneten Preform gegebenenfalls mit einer Verstärkungsstruktur erreicht. Durch das Einspritzen eines ersten Kunststoffs gemäß Erfindung wird die Preform gezielt verform, so dass das fertige Bauteil die durch den Formhohlraum des Formwerkzeugs vorgegebene äußere Form und durch die Fluidinjektionstechnik vorgegebenen Öffnungsquerschnitte aufweist.

Nach einer vorteilhaften Ausgestaltung besteht die Preform zumindest teilweise aus Kunststoff und zwar aus einem zweiten Kunststoff. Als zweiter Kunststoff eignen sich beispielsweise PET, PBT, PVC, PP und PA. Bei PA sind insbesondere PA6, PA6.6 und PA12 geeignet.

Nach einer weiteren vorteilhaften Ausgestaltung der Erfindung sind der erste und der zweite Kunststoff verschieden. Durch die Verwendung unterschiedlicher Kunststoffe können zusätzlich zu dem Ausformen des Bauteils Abschnitte eines von dem zweiten Kunststoff der Preform abweichenden ersten Kunststoffs an das Bauteil angeformt werden.

Nach einer weiteren vorteilhaften Ausgestaltung der Erfindung sind der erste und der zweite Kunststoff identisch.

Nach einer weiteren vorteilhaften Ausgestaltung der Erfindung wird in den Formhohlraum eine vorgefertigte und formstabile Preform eingelegt, welche zur Verstärkung eine Kunststoffband-Struktur aufweist. Diese wird auch als Composite bezeichnet. Das Kunststoffband ist dabei zu einem Gewebe, einem Geflecht oder einem Gestrick verarbeitet. Es kann sich außerdem um eine Umwicklung handeln. Das Kunststoffband kann eine Verstärkung aus Kohlefasern oder Glasfasern aufweisen. Alternativ oder kumulativ kann die Verstärkung auch PPTA (Handelsname Kevlar) bestehen. Darüber hinaus kann eine Verstärkung auch in Form von Naturfasern oder Biofasern vorliegen. Besteht die Preform aus einem zweiten Kunststoff, so kann die Kunststoffband-Struktur in den zweiten Kunststoff der Preform eingebettet sein, so dass die vorgefertigte und formstabile Preform einen einstückigen Körper darstellt. Alternativ kann die Kunststoffband-Struktur an der Oberfläche der Preform lose anliegen. Die Kunststoffband-Struktur kann aus einer Lage oder aus mehreren Lagen Kunststoffband bestehen. Die Kunststoffband-Struktur kann derart in den zweiten Kunststoff der Preform eingebettet sein, dass sie nicht über die Oberfläche der Preform übersteht. Alternativ dazu befindet sich die Kunststoffband-Struktur an der Außenseite der Preform. Sie kann sich jedoch auch an der Innenseite befinden. Ein Rohr mit einer derartigen Kunststoffband-Struktur wird auch als Tape-Rohr bezeichnet. Mit dem erfindungsgemäßen Verfahren kann eine Preform mit einer Kunststoffband-Struktur abschnittsweise oder insgesamt aufgeweitet werden.

Nach einer weiteren vorteilhaften Ausgestaltung der Erfindung ist die Kunststoffband-Struktur in den zweiten Kunststoff eingebettet.

Nach einer weiteren vorteilhaften Ausgestaltung der Erfindung besteht die Preform zumindest teilweise aus Metall.

Nach einer weiteren vorteilhaften Ausgestaltung der Erfindung wird eine Preform in den Formhohlraum eingelegt, der mindestens eine zweite Öffnung aufweist. Der Formhohlraum des Formwerkzeugs weist einen Formhohlraumabschnitt auf, der sich bei der in den Formhohlraum eingelegten Preform an die zweite Öffnung der Preform anschließt. Beim Injizieren des ersten Fluids unter Druck in die flüssige Kunststoffformmasse des ersten Kunststoffs wird die Kunststoffformmasse durch die zweite Öffnung der Preform in den Formhohlraumabschnitt gedrückt und füllt diesen zumindest teilweise aus. Dadurch können an der Preform und damit an das Bauteil zusätzliche Abschnitte aus dem ersten Kunststoff angeformt werden. Diese zusätzlichen Abschnitte bestehen nur aus dem ersten Kunststoff und nicht wie das übrige Bauteil aus einer Schicht des Materials der Preform und einer Schicht des ersten Kunststoffs.

Nach einer weiteren vorteilhaften Ausgestaltung der Erfindung wird durch das Injizieren des ersten Fluids in der Kunststoffformmasse, welche in den Formhohlraumabschnitt gedrückt wird, ein Hohlraum in der im Formhohlraumabschnitt enthaltenen Kunststoffformmasse ausgebildet. Der aus dem ersten Kunststoff an das Bauteil angeformte Abschnitt ist damit innen hohl ausgebildet.

Nach einer weiteren vorteilhaften Ausgestaltung der Erfindung wird als flüssige Kunststoffformmasse des ersten Kunststoffs eine Kunststoffformmasse eingespritzt, welche Verstärkungsfasern enthält. Dabei kann es sich um Glasfasern, Kohlefasern, Aramidfasern, Naturfaser oder sonstige Additive handeln. Glasfaserverstärkter Kunststoff wird auch als GFK bezeichnet. Kohlefaserverstärkter Kunststoff wird als CFK bezeichnet. Die Verstärkungsfasern lagern sich beim Einspritzen in den Preform-Hohlraum an der Innenseite der Preform an. Sie reduzieren dabei das Risiko, dass bei einer Preform mit Verstärkungsstruktur der erste Kunststoff zwischen in den Zwischenräumen zwischen den einzelnen die Verstärkungsstruktur bildenden Fasern aufreißt, wenn der zweite Kunststoff mit hohem Druck in die Preform eingespritzt wird.

Nach einer weiteren vorteilhaften Ausgestaltung der Erfindung besteht die Preform aus mehreren Lagen von Kunststoff, welche unterschiedlich mit Verstärkungsfasern gefüllt sind.

Nach einer weiteren vorteilhaften Ausgestaltung der Erfindung werden mehrere Lagen eines ersten, dritten oder weiteren Kunststoffs in die Preform eingespritzt. Die Kunststoffe können mit unterschiedlichen Verstärkungsfasern in unterschiedlicher Menge gefüllt sein. Es ist möglich, beim Einspritzen eines dritten Kunststoffs den ersten Kunststoff aus dem Preform-Hohlraum zu verdrängen. Die gezielte Verformung der Preform kann bei jedem der eingespritzten Kunststoffe erfolgen. Dies hängt jeweils von eingestellten Druck ab. Das fertige Bauteil weist in diesem Fall unter Umständen mehrere Schichten unterschiedlicher Kunststoffe auf. Dies wird als Multi-Layer bezeichnet.

Nach einer weiteren vorteilhaften Ausgestaltung der Erfindung wird die Preform vorgewärmt, bevor die Kunststoffformmasse des ersten Kunststoffs in die Preform injiziert wird. Ist die Preform vorgewärmt, verbindet sich der erste Kunststoff der injizierten Kunststoffformmasse besser mit dem zweiten Kunststoff der Preform, sofern diese aus Kunststoff besteht. Ist die Preform aus Metall hergestellt, kann in der Regel auf ein Vorwärmen der Preform verzichtet werden.

Nach einer weiteren vorteilhaften Ausgestaltung der Erfindung wird das Formwerkzeug beheizt und die Preform in dem Formhohlraum dadurch vorgewärmt, bevor die Kunststoffformmasse injiziert wird.

Nach einer weiteren vorteilhaften Ausgestaltung der Erfindung wird in der Preform ein drittes erwärmtes Fluid eingeleitet, bevor die Kunststoffformmasse injiziert wird. Durch dieses dritte Fluid wird die Preform vorgewärmt.

Nach einer weiteren vorteilhaften Ausgestaltung der Erfindung wird durch einen an dem Formwerkzeug angeordneten zweiten Kunststoff-Injektor eine flüssige Kunststoffformmasse eines dritten Kunststoffs von außen an die Preform angespritzt. Die Kunststoffformmasse des dritten Kunststoffs lagert sich damit nicht an der Innenseite der Preform an sondern ausschließlich an der Außenseite. Dadurch ergeben sich zusätzliche Gestaltungsmöglichkeiten des Bauteils. Bei der Injektion der Kunststoffformmasse des dritten Kunststoffs ist dafür Sorge zu tragen, dass die Preform in dem Formwerkzeug nicht kollabiert. Der Druck ist entsprechend einzustellen.

Nach einer weiteren vorteilhaften Ausgestaltung der Erfindung erfolgt die Injektion der flüssigen Kunststoffformmasse des dritten Kunststoffs in das Formwerkzeug nach der Injektion der flüssigen Kunststoffformmasse des ersten Kunststoffs.

Nach einer weiteren vorteilhaften Ausgestaltung der Erfindung erfolgt die Injektion der flüssigen Kunststoffformmasse des dritten Kunststoffs in das Formwerkzeug vor der Injektion der flüssigen Kunststoffformmasse des ersten Kunststoffs.

Nach einer weiteren vorteilhaften Ausgestaltung der Erfindung ist der dritte Kunststoff von dem ersten Kunststoff verschieden. Er kann darüber hinaus auch von dem zweiten Kunststoff verschieden sein.

Nach einer weiteren vorteilhaften Ausgestaltung der Erfindung stimmt der dritte Kunststoff mit dem ersten Kunststoff überein. Insbesondere kann der dritte Kunststoff mit dem zweiten Kunststoff übereinstimmen.

Nach einer weiteren vorteilhaften Ausgestaltung der Erfindung wird zunächst in den Preformhohlraum die flüssige Kunststoffformmasse des ersten Kunststoffs mit einem ersten Druck p₁ eingespritzt, bis der Preformhohlraum mit der flüssigen Kunststoffformmasse des ersten Kunststoffs gefüllt ist. Es erfolgt eine volumetrische Füllung. Anschließend wird das Einspritzen der flüssigen Kunststoffformmasse des ersten Kunststoffs mit einem zweiten Druck p₂ mit p₂ > p₁ fortgesetzt, wobei die Preform in das Bauteil übergeht. Der Druck p₂ kann um ein Vielfaches größer sein als der Druck p₁. Er hängt von dem Material der Preform und davon ab, ob die Preform mit einer zusätzlichen Verstärkung ausgestattet ist. Besteht die Preform aus einem zweiten Kunststoff ohne Verstärkungsstruktur, ist p₂ in der Regel kleiner als eine Preform aus zweitem Kunststoff mit einer Verstärkungsstruktur. Noch größer ist p₂ bei Preformen aus Metall. Durch den hohen Druck wird die Verformung der Preform zu dem Bauteil ausgelöst oder zumindest begünstigt.

Nach einer weiteren vorteilhaften Ausgestaltung der Erfindung ist p₂ mindestens doppelt so groß ist wie p₁.

Nach einer weiteren vorteilhaften Ausgestaltung der Erfindung ist p₂ mindestens um den Faktor 10 größer als p₁: p₂ = 10 * p₁, bevorzugt mindestens um den Faktor 50 größer als p₁: p₂ = 50 * p₁, besonders bevorzugt mindestens um den Faktor 70 größer als p₁: p₂ = 70 * p₁.

Nach einer weiteren vorteilhaften Ausgestaltung der Erfindung entspricht p₁ ca. 60 bar und p₂ ca. 4.000 bar.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung ist ein Ausführungsbeispiel des Erfindungsgegenstandes dargestellt. Es zeigen:
- Figur 1: Formwerkzeug mit Formhohlraum und mit zwei Injektorköpfen und Nadelventilen,
- Figur 2: Preform aus einem zweiten Kunststoff im Längsschnitt,
- Figur 3: Formhohlraum mit Injektorköpfen gemäß Figur 1 und mit in den Formhohlraum eingelegter Preform,
- Figur 4: Formhohlraum mit Preform gemäß Figur 3, wobei die beiden Injektorköpfe in die Preform eingefahren sind,
- Figur 5: Formhohlraum mit Preform gemäß Figur 3 und in die Preform eingespritzter Schmelze eines ersten Kunststoffs,
- Figur 6: Formhohlraum mit Preform nach weiterem Einspritzen der Schmelze des ersten Kunststoffs bei erhöhtem Druck,
- Figur 7: Formhohlraum mit Preform einer in den Formhohlraum eingespritzten Schmelze eines dritten Kunststoffs,
- Figur 8: Formhohlraum mit Preform und erstem sowie drittem eingespritzten Kunststoff nach Erzeugen eines Hohlraums mittels Wasser.

### Beschreibung des Ausführungsbeispiels

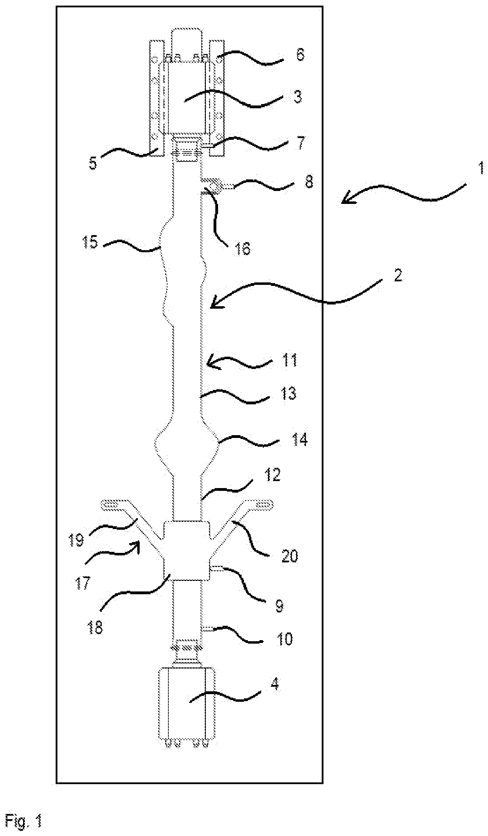

In Figur 1 ist ein Formwerkzeug 1 mit einem Formhohlraum 2, mit einem ersten Injektorkopf 3 und einem zweiten Injektorkopf 4 dargestellt. Das Formwerkzeug ist Bestandteil einer ansonsten in der Zeichnung nicht dargestellten Spritzgussmaschine. Die beiden Injektorköpfe 3, 4 sind jeweils mit einem in der Zeichnung nicht dargestellten Antrieb ausgestattet, der die beiden Injektorköpfe 3, 4 aktiv in den Formhohlraum 2 hinein bewegt und aus diesem heraus bewegt. Der Formhohlraum 2 ist länglich. Die beiden Injektorköpfe 3, 4 werden bei ihrer Bewegung in Längsrichtung des Formhohlraums beim Einfahren aufeinander zubewegt und beim Ausfahren aus dem Formhohlraum 2 voneinander wegbewegt. In der Darstellung gemäß Figur 1 sind die beiden Injektorköpfe 3, 4 aus dem Formhohlraum 2 mittels der Antriebe ausgefahren. Der erste Injektorkopf 3 ist darüber hinaus auf Schienen 5, 6 verschiebbar gelagert. Über insgesamt vier Nadelventile 7, 8, 9, 10 werden die Schmelze zweier verschiedener Kunststoffe in den Formhohlraum 2 eingespritzt. Ferner wird über das Nadelventil 10 ein Fluid in die flüssige Schmelze zur Erzeugung eines Hohlraums eingespritzt.

Der Formhohlraum 2 weist drei Formhohlraum-Abschnitte auf:
Ein erster Formhohlraum-Abschnitt 11 ist länglich. Er weist Bereiche 12, 13 auf, die zylindrisch mit kreisrundem Querschnitt ausgebildet sind. In den Bereichen 14, 15 ist der Öffnungsquerschnitt gegenüber den Bereichen 12, 13 vergrößert. Ein zweiter Formhohlraum-Abschnitt 16 ist als Ansatz an den ersten Formhohlraum-Abschnitt ausgebildet.
Ein dritter Formhohlraum-Abschnitt 17 weist einen den zylindrischen Bereich 12 umgebenden zylindrischen Ring 18 und zwei seitlich überstehende Ansätze 19, 20 auf. Der zweite und der dritte Formhohlraum-Abschnitt 16, 17 sind durch Schieber von dem ersten Formhohlraum-Abschnitt trennbar. Die Schieber sind in der Zeichnung nicht dargestellt. Die Schieber verhindern, dass sich eine in den Formhohlraum 2 eingelegte Preform während der Durchführung des Verfahrens in dem zweiten Formhohlraum-Abschnitt 16 und in dem dritten Formhohlraum-Abschnitt 17 nicht so verformt wie in den Bereichen 14, 15 des ersten Formhohlraum-Abschnitts 11.

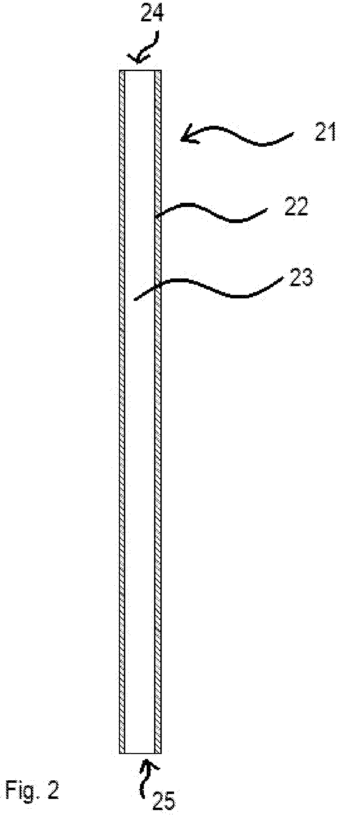

Figur 2 zeigt eine Preform 21 im Längsschnitt. Die Preform 21 ist als formstabiles längliches Rohr mit kreisförmigem Querschnitt ausgebildet. Die Preform 21 weist einen Mantel 22 auf, der einen Preform-Hohlraum 23 begrenzt. Der Mantel 22 besteht aus einem zweiten Kunststoff, in den eine Verstärkungsstruktur aus in der Zeichnung nicht dargestellten Kunststoffbändern eingebettet ist. An den beiden Enden weist die Preform Öffnungen 24, 25 auf.

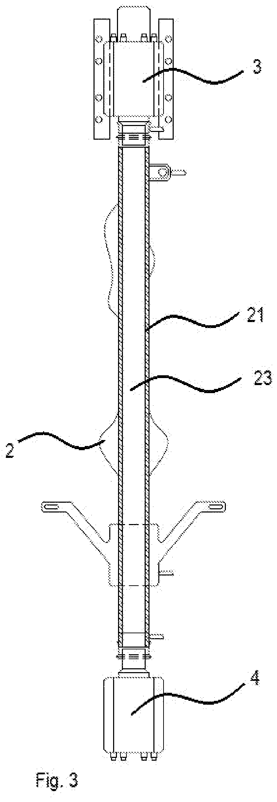

In der Darstellung gemäß Figur 3 ist die Preform 21 in den Formhohlraum 2 eingesetzt. Die Preform 21 wird durch die dem Formhohlraum 2 zugewandten Enden der Injektorköpfe 3 und 4 zentriert. Die äußere Kontur der Preform 21 stimmt abschnittsweise mit der inneren Kontur des Formhohlraums 2 überein. Dies gilt insbesondere für die zylindrischen Bereiche 12 und 13 des ersten Formhohlraum-Abschnitts 11.

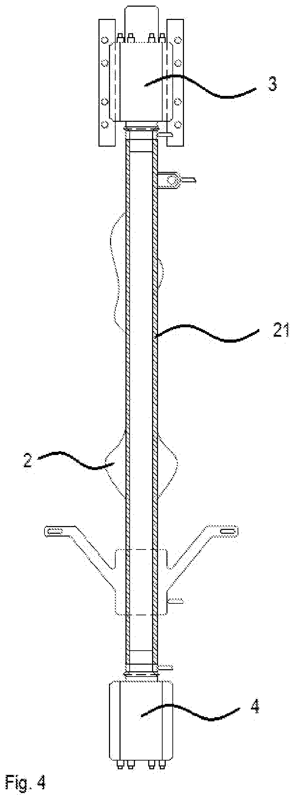

In der Darstellung gemäß Figur 4 sind die beiden Injektorköpfe 3 und 4 in den Formhohlraum 2 mittels der in der Zeichnung nicht dargestellten Antriebe eingefahren. Die dem Formhohlraum 2 zugewandten Abschnitte der Injektorköpfe 3 und 4 sind nunmehr in den Preform-Hohlraum 23 der Preform 21 aufgenommen.

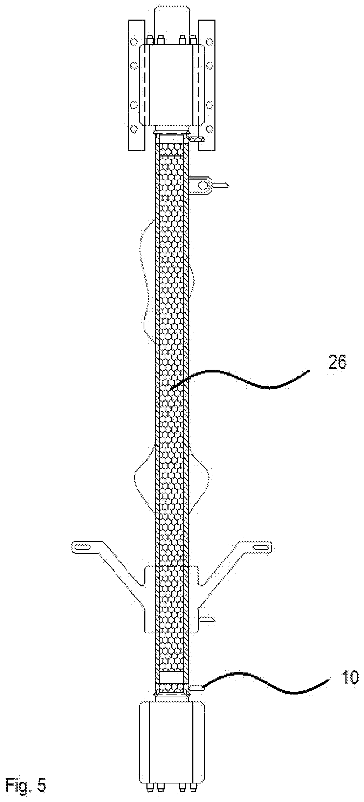

Im nächsten Schritt wird, wie in Figur 5 dargestellt, über das Nadelventil 10 die flüssige Schmelze eines ersten Kunststoffs 26 in den Preform-Hohlraum 23 eingespritzt. Hierzu weist die Preform 21 an der Position des Nadelventils 9 eine in der Zeichnung nicht dargestellte Durchgangsöffnung auf. Das Einspritzen des ersten Kunststoffs 26 in die Preform 21 erfolgt bei einem vorgegebenen ersten Druck p₁ und einer vorgegebenen ersten Temperatur T₁ bis der gesamte Preform-Hohlraum 23 der Preform 21 mit der Schmelze des ersten Kunststoffs 26 gefüllt ist.

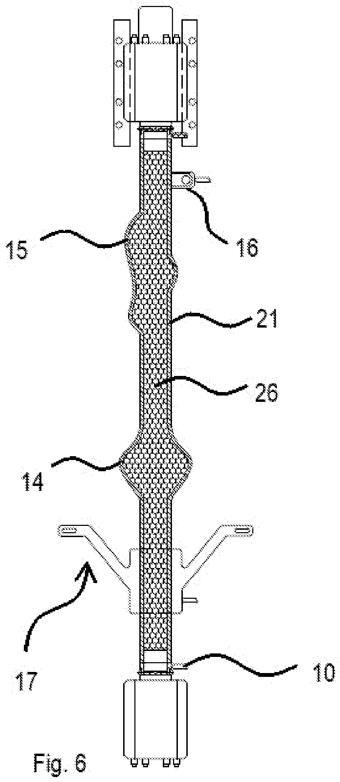

Anschließend wird, wie in Figur 6 dargestellt, das Einspritzen der flüssigen Schmelze des ersten Kunststoffs 26 über das Nadelventil 10 mit einem zweiten Druck p₂, der größer ist als der erste Druck p₁, fortgesetzt. Dabei ist der Druck p₂ so groß, dass sich die Preform 21 in den Bereichen 14, 15 des ersten Formhohlraum-Abschnitts 11 derart verformt, dass die Preform in dem Bereich 14, 15 die Form des Formhohlraums annimmt. Dies gilt nicht jedoch in dem zweiten Formhohlraum-Abschnitt 16 und nicht in dem dritten Formhohlraum-Abschnitt 17. Eine Verformung in dem zweiten und dritten Formhohlraum-Abschnitten 16, 17 wird durch die in der Zeichnung nicht dargestellten Schieber verhindert. Beim Verformen der Preform 21 in den Bereichen 14 und 15 verkürzt sich die axiale Länge der Preform 21. Da der Injektorkopf 3 auf Schienen 5, 6 verschiebbar gelagert ist, kann er der Verkürzung folgen. Der Injektorkopf 3 verschiebt sich dabei entlang der Schienen 5, 6 in Richtung des Injektorkopfs 4 um eine Strecke, die der axialen Verkürzung der Preform 21 entspricht.

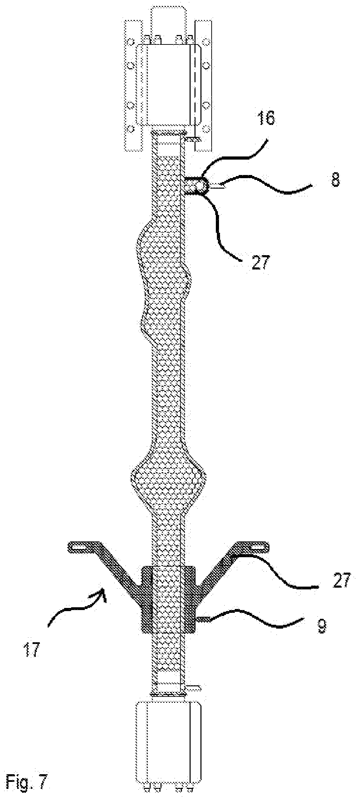

Anschließend werden in den Formhohlraum-Abschnitten 16 und 17 die als Konturschieber ausgebildeten Schieber derart bewegt, dass die entsprechenden Abschnitte des Formhohlraums mit dem ersten Formhohlraum-Abschnitt 22 verbunden sind. Nun wird, wie in Figur 7 dargestellt, über die Nadelventile 8 und 9 die flüssige Schmelze eines dritten Kunststoffs 27 in den zweiten und dritten Formhohlraum-Abschnitt 16, 17 eingespritzt. Da die Preform 21 noch mit der flüssigen Schmelze des ersten Kunststoffs 26 gefüllt ist, kommt es in dem zweiten und dritten Formhohlraum-Abschnitt 16, 17 nicht zu einer Verformung der Preform 21 beim Einspritzen des dritten Kunststoffs 27.

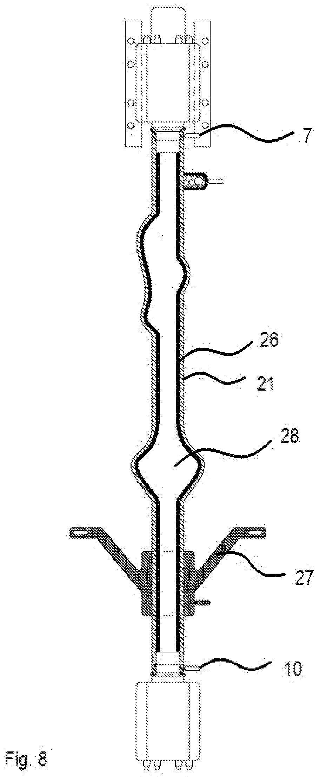

Bei dem in Figur 8 dargestellten Verfahrensschritt wird über das Nadelventil 9 Wasser in die flüssige Schmelze des ersten Kunststoffs 26 unter Druck eingespritzt. Dabei wird ein Teil der flüssigen Schmelze des ersten Kunststoffs 26 aus der Preform 21 verdrängt und über das geöffnete Nadelventil 7 aus dem Formhohlraum 2 herausgedrückt. Dabei bildet sich in der flüssigen Schmelze des ersten Kunststoffs in dem Preform-Hohlraum 23 ein Bauteil-Hohlraum 28 aus. In der Darstellung ist erkennbar, dass die verformte Preform nunmehr an ihrer Innenseite eine Schicht des ersten Kunststoffs 26 sowie in dem zweiten und dritten Formhohlraum-Abschnitten 16, 17 an ihrer Außenseite angeformte Abschnitte des dritten Kunststoffs 27 aufweist. Die durch den zweiten und dritten Formhohlraum-Abschnitte 16, 17 des Formhohlraums 2 vorgegebenen Abschnitte des fertigen Bauteils stellen Befestigungspunkte dar.

Abschließend kann der Formhohlraum geöffnet und das Bauteil entnommen werden.

Sämtliche Merkmale der Erfindung können sowohl einzeln als auch in beliebiger Kombination miteinander erfindungswesentlich sein.

### Bezugszahlen

- 1: Formwerkzeug
- 2: Formhohlraum
- 3: Injektorkopf
- 4: Injektorkopf
- 5: Schiene
- 6: Schiene
- 7: Nadelventil
- 8: Nadelventil
- 9: Nadelventil
- 10: Nadelventil
- 11: erster Formhohlraum-Abschnitt
- 12: zylindrischer Bereich
- 13: zylindrischer Bereich
- 14: Bereich
- 15: Bereich
- 16: zweiter Formhohlraum-Abschnitt
- 17: dritter Formhohlraum-Abschnitt
- 18: ringförmiger Bereich
- 19: Ansatz
- 20: Ansatz
- 21: Preform
- 22: Mantel
- 23: Preform-Hohlraum
- 24: Öffnung
- 25: Öffnung
- 26: erster Kunststoff
- 27: dritter Kunststoff
- 28: Bauteil-Hohlraum

## Patentansprüche

1. Verfahren zur Herstellung eines Bauteils aus einer als Hohlkörper ausgebildeten, vorgefertigten und formstabilen Preform, welche einen Preform-Hohlraum aufweist und mindestens eine Öffnung aufweist, mit folgenden Verfahrensschritten
Einlegen der Preform (21) in den Formhohlraum (2) eines mit einem ersten Kunststoff-Injektor ausgestatteten Formwerkzeugs (1) einer Kunststoffspritzgießmaschine, wobei die innere Kontur des Formhohlraums (2) im wesentlichen die äußere Kontur des Bauteils definiert,
Ausrichten der Preform (21) in dem Formhohlraum (2), derart dass die Öffnung der Preform (21) an der Position eines ersten Kunststoff-Injektors in dem Formwerkzeug (1) angeordnet ist,
Schließen des Formwerkzeugs (1),
Injektion einer flüssigen Kunststoffformmasse eines ersten Kunststoffs (26) mittels des ersten Kunststoff-Injektors und Einleitung der flüssigen Kunststoffformmasse durch die dem ersten Kunststoff-Injektor zugewandte Öffnung der Preform (21) in den Preform-Hohlraum (23), Injektion eines ersten Fluids unter Druck in die flüssige Kunststoffformmasse des ersten Kunststoffs (26) wobei sich in der Kunststoffformmasse ein Bauteil-Hohlraum (28) durch Verdrängung der Kunststoffformmasse ausbildet,
Injektion eines zweiten Fluids unter Druck in den Bauteil-Hohlraum (28), wobei das erste Fluid aus dem Bauteil-Hohlraum (28) verdrängt wird, Übergang der Preform (21) in das Bauteil, wobei sich die Preform (21) gezielt verformt und sich die äußere Kontur des Bauteils durch den Druck und/ oder die Temperatur, die auf die Preform (21) durch die Kunststoffformmasse des ersten Kunststoffs (26) und/ oder das erste Fluid und/ oder das zweite Fluid einwirkt, ausformt,
Erstarren der Kunststoffformmasse des ersten Kunststoffs (26), Entformen des Bauteils aus dem Formhohlraum (2).

2. Verfahren nach Anspruch 1, **dadurch gekennzeichnet, dass** die Preform (21) zumindest teilweise aus einem zweiten Kunststoff besteht.

3. Verfahren nach Anspruch 2, **dadurch gekennzeichnet, dass**, der zweite Kunststoff von dem ersten Kunststoff (26) verschieden ist.

4. Verfahren nach Anspruch 2, **dadurch gekennzeichnet, dass** der erste Kunststoff (26) und der zweite Kunststoff identisch sind.

5. Verfahren nach einem der Ansprüche 2 bis 4, **dadurch gekennzeichnet, dass** in den Formhohlraum (2) eine vorgefertigte und formstabile Preform (21) eingelegt wird, welche eine Kunststoffband-Struktur in Form einer Umwicklung, eines Gewebes, eines Geflechts oder eines Gestricks aus Kunststoffband umfasst.

6. Verfahren nach Anspruch 5, **dadurch gekennzeichnet, dass** die Kunststoffband-Struktur in den zweiten Kunststoff der Preform (21) eingebettet ist.

7. Verfahren nach einem der vorhergehenden Ansprüche, **dadurch gekennzeichnet, dass** die Preform (21) zumindest teilweise aus Metall besteht.

8. Verfahren nach einem der vorhergehenden Ansprüche, **dadurch gekennzeichnet, dass** eine Preform (21) in den Formhohlraum (2) eingelegt wird, die mindestens eine zweite Öffnung aufweist, dass der Formhohlraum (2) einen Formhohlraumabschnitt aufweist, der sich bei der in den Formhohlraum (2) eingelegten Preform (21) an die zweite Öffnung der Preform (21) anschließt, dass beim Injizieren des ersten Fluids unter Druck in die flüssige Kunststoffformmasse des ersten Kunststoffs die Kunststoffformmasse durch die zweite Öffnung der Preform in den Formhohlraumabschnitt gedrückt wird und diesen zumindest teilweise ausfüllt.

9. Verfahren nach Anspruch 8, **dadurch gekennzeichnet, dass** durch das Injizieren des ersten Fluids in die Kunststoffformmasse des ersten Kunststoffs (26), welche in den Formhohlraumabschnitt gedrückt wird, ein Hohlraum in der im Formhohlraumabschnitt enthaltenen Kunststoffformmasse ausgebildet wird.

10. Verfahren nach einem der vorhergehenden Ansprüche, **dadurch gekennzeichnet, dass** als flüssige Kunststoffformmasse des ersten Kunststoffs (26) eine Kunststoffformasse eingespritzt wird, welche Verstärkungsfasern enthält.

11. Verfahren nach einem der vorhergehenden Ansprüche, **dadurch gekennzeichnet, dass** die Preform (21) vorgewärmt wird, bevor die Kunststoffformmasse des ersten Kunststoffs (26) in die Preform (21) injiziert wird.

12. Verfahren nach Anspruch 11, **dadurch gekennzeichnet, dass** das Formwerkzeug (1) beheizt wird und die Preform (21) in dem Formhohlraum (2) vorgewärmt wird.

13. Verfahren nach Anspruch 11 oder 12, **dadurch gekennzeichnet, dass** in die Preform (21) ein drittes erwärmtes Fluid eingeleitet wird, welches die Preform (21) vorwärmt.

14. Verfahren nach einem der vorhergehenden Ansprüche, **dadurch gekennzeichnet, dass** durch einen an dem Formwerkzeug (1) angeordneten zweiten Kunststoff-Injektor eine flüssige Kunststoffformmasse eines dritten Kunststoffs von außen an die Preform angespritzt wird.

15. Verfahren nach Anspruch 14, **dadurch gekennzeichnet, dass** die Injektion der flüssigen Kunststoffformmasse des dritten Kunststoffs (27) in das Formwerkzeug (1) nach der Injektion der flüssigen Kunststoffformmasse des ersten Kunststoffs (26) erfolgt.

16. Verfahren nach Anspruch 14, **dadurch gekennzeichnet, dass** die Injektion der flüssigen Kunststoffformmasse des dritten Kunststoffs (27) in das Formwerkzeug (1) vor der Injektion der flüssigen Kunststoffformmasse des ersten Kunststoffs (26) erfolgt.

17. Verfahren nach einem der Ansprüche 14 bis 16, **dadurch gekennzeichnet, dass** der dritte Kunststoff (27) von dem ersten Kunststoff (26) verschieden ist.

18. Verfahren nach einem der Ansprüche 14 bis 16, **dadurch gekennzeichnet, dass** der dritte Kunststoff (27) mit dem ersten Kunststoff (26) übereinstimmt.

19. Verfahren nach einem der vorhergehenden Ansprüche, **dadurch gekennzeichnet, dass** zunächst in den Preform-Hohlraum (23) die flüssige Kunststoffformmasse des ersten Kunststoffs (26) mit einem ersten Druck p₁ eingespritzt wird, bis der Preform-Hohlraum (23) mit der flüssigen Kunststoffformmasse des ersten Kunststoffs (26) gefüllt ist, dass anschließend das Einspritzen der flüssigen Kunststoffformmasse des ersten Kunststoffs (26) mit einen zweiten Druck p₂ mit p₂ > p₁ fortgesetzt wird, wobei die Preform (21) in das Bauteil übergeht.

20. Verfahren nach Anspruch 19, **dadurch gekennzeichnet, dass** p₂ mindestens doppelt so groß ist wie p₁, bevorzugt mindestens zehn Mal so groß, besonders bevorzugt mindestens fünfzig Mal so groß ist wie p₁.

## Claims

1. Method for producing a component from a prefabricated and dimensionally stable preform which is designed as a hollow body and which has a preform cavity and at least one opening, having the following process steps
Inserting the preform (21) in the mould cavity (2) of a plastic injection moulding machine mould tool (1) equipped with a first plastic injector, wherein the inner contour of the mould cavity (2) essentially defines the outer contour of the component,
Aligning the preform (21) in the mould cavity (2) so that the opening of the preform (21) is adjusted to the position of a first plastic injector in the mould tool (1),
Closing the mould tool (1),
Injecting a liquid plastic moulding compound of a first plastic (26) by means of the first plastic injector and introducing a liquid plastic moulding compound into the preform cavity (23) through the opening of the preform (21) facing the first plastic injector,
Injecting a first pressurised fluid into the liquid plastic moulding compound of the first plastic (26), wherein a component cavity (28) is formed in the plastic moulding compound by displacing the plastic moulding compound, Injecting a second pressurised fluid into the component cavity (28), wherein the first fluid is displaced out of the component cavity (28), Converting the preform (21) into the component, wherein the preform (21) is moulded in a controlled manner and the outer contour of the component is formed by the pressure and/or the temperature that acts upon the preform (21) by means of the plastic moulding compound of the first plastic (26) and/or the first fluid and/or the second fluid,
Solidifying of the plastic moulding compound of the first plastic (26), Demoulding the component from the mould cavity (2).

2. Method according to claim 1, **characterised in that** the preform (21) is at least partially comprised of a second plastic.

3. Method according to claim 2, **characterised in that** the second plastic differs from the first plastic (26).

4. Method according to claim 2, **characterised in that** the first plastic (26) and the second plastic are identical.

5. Method according to one of the claims 2 to 4, **characterised in that** a prefabricated and dimensionally stable preform (21) is inserted into the mould cavity (2) which comprises a plastic tape structure in the form of a wrap, a woven fabric, a mesh or a knit made out of plastic tape.

6. Method according to claim 5, **characterised in that** the plastic tape structure is embedded in the second plastic of the preform (21).

7. Method according to one of the previous claims, **characterised in that** the preform (21) is at least partially made of metal.

8. Method according to one of the previous claims, **characterised in that** a preform (21) is inserted in the mould cavity (2) that has at least a second opening, that the mould cavity (2) has a mould cavity section that is joined with the second opening of the preform (21) with the preform (21) inserted in the mould cavity (2), that upon injection of the pressurised first fluid into the liquid plastic moulding compound of the first plastic the plastic moulding compound is pressed through the second opening of the preform into the mould cavity section and at least partially fills this.

9. Method according to claim 8, **characterised in that** a cavity is formed in the plastic moulding compound contained in the mould cavity section through the injection of the first fluid into the plastic moulding compound of the first plastic (26) that is pressed into the mould cavity section.

10. Method according to one of the previous claims, **characterised in that** a plastic moulding compound that contains reinforcing fibres is injected as a liquid plastic moulding compound of the first plastic (26).

11. Method according to one of the previous claims, **characterised in that** the preform (21) is preheated before the plastic moulding compound of the first plastic (26) is injected into the preform (21).

12. Method according to claim 11, **characterised in that** the mould tool (1) is heated and the preform (21) is preheated in the mould cavity (2).

13. Method according to claim 11 or 12, **characterised in that** a third heated fluid is introduced into the preform (21) which preheats the preform (21).

14. Method according to one of the previous claims, **characterised in that** a second plastic injector arranged on the mould tool (1) is used to mould a liquid plastic moulding compound of a third plastic onto the preform from the outside.

15. Method according to claim 14, **characterised in that** the injection of the liquid plastic moulding compound of the third plastic (27) into the mould tool (1) is performed after the injection of the liquid plastic moulding compound of the first plastic (26).

16. Method according to claim 14, **characterised in that** the injection of the liquid plastic moulding compound of the third plastic (27) into the mould tool (1) is performed before the injection of the liquid plastic moulding compound of the first plastic (26).

17. Method according to one of the claims 14 to 16, **characterised in that** the third plastic (27) differs from the first plastic (26).

18. Method according to one of the claims 14 to 16, **characterised in that** the third plastic (27) corresponds to the first plastic (26).

19. Method according to one of the previous claims, **characterised in that** in the preform cavity (23) the liquid plastic moulding compound of the first plastic (26) is initially injected with a first pressure p₁ until the preform cavity (23) is filled with the liquid plastic moulding compound of the first plastic (26), and that the injection of the liquid plastic moulding compound of the first plastic (26) is then continued with a second pressure p₂ where p₂ > p₁, wherein the preform (21) transforms into the component.

20. Method according to claim 19, **characterised in that** p₂ is at least two times greater than p₁, preferably at least ten times greater, and especially preferably at least fifty times greater than p₁.

## Revendications

1. Procédé pour fabriquer une pièce à partir d'une préforme préfabriquée et dimensionnellement stable réalisée sous la forme d'un corps creux qui présente une cavité de préforme et au moins une ouverture, comportant les étapes de procédé suivantes :
mise en place de la préforme (21) dans la cavité de moulage (2) d'un outil de moulage (1) muni d'un premier injecteur de matière plastique d'une presse d'injection plastique, le contour intérieur de la cavité de moulage (2) définissant pour l'essentiel le contour extérieur de la pièce, ajustement de la préforme (21) dans la cavité de moulage (2) de manière que l'ouverture de la préforme (21) soit disposée dans l'outil de moulage (1) au niveau d'un premier injecteur de matière plastique,
fermeture de l'outil de moulage (1),
injection d'une matière à mouler plastique liquide d'un premier plastique (26) au moyen dudit premier injecteur de matière plastique et introduction de la matière à mouler plastique liquide dans la cavité de préforme (23) par l'ouverture de la préforme (21) dirigée vers ledit premier injecteur de matière plastique,
injection d'un premier fluide sous pression dans la matière à mouler plastique liquide du premier plastique (26), formant une cavité de pièce (28) dans la matière à mouler plastique sous l'effet du refoulement de ladite matière à mouler plastique,
injection d'un deuxième fluide sous pression dans la cavité de pièce (28), ledit premier fluide étant alors refoulé hors de la cavité de pièce (28), transformation de la préforme (21) en ladite pièce, la préforme (21) étant formée de manière ciblée et le contour extérieur de ladite pièce étant façonné sous l'effet de la pression et/ou de la température qui agit sur la préforme (21) à travers la matière à mouler plastique du premier plastique (26) et/ou du premier fluide et/ou du deuxième fluide,
solidification de la matière à mouler plastique du premier plastique (26), démoulage de la pièce hors de la cavité de moulage (2).

2. Procédé selon la revendication 1, **caractérisé en ce que** la préforme (21) est constituée au moins en partie d'un deuxième plastique.

3. Procédé selon la revendication 2, **caractérisé en ce que** ledit deuxième plastique est différent du premier plastique (26).

4. Procédé selon la revendication 2, **caractérisé en ce que** le premier plastique (26) et ledit deuxième plastique sont identiques.

5. Procédé selon l'une des revendications 2 à 4, **caractérisé en ce qu'**une préforme (21) préfabriquée et dimensionnellement stable, munie d'une structure constituée de bandes de plastique sous la forme d'un enroulement, d'un tissé, d'un maillage ou d'un tricot, est placée dans la cavité de moulage (2).

6. Procédé selon la revendication 5, **caractérisé en ce que** ladite structure de bandes de plastique est intégrée dans ledit deuxième plastique de la préforme (21).

7. Procédé selon l'une quelconque des revendications précédentes, **caractérisé en ce que** la préforme (21) se compose au moins en partie de métal.

8. Procédé selon l'une quelconque des revendications précédentes, **caractérisé en ce qu'**une préforme (21) qui présente au moins une deuxième ouverture est placée dans la cavité de moulage (2), que la cavité de moulage (2) présente une section creuse de moulage qui est contiguë à ladite deuxième ouverture de la préforme (21) lorsque la préforme (21) est placée dans la cavité de moulage (2), que lors de l'injection dudit premier fluide sous pression dans la matière à mouler plastique liquide du premier plastique, ladite matière à mouler plastique est poussée dans la section creuse de moulage à travers la deuxième ouverture de la préforme et remplit au moins en partie ladite section.

9. Procédé selon la revendication 8, **caractérisé en ce que** l'injection dudit premier fluide dans la matière à mouler plastique du premier plastique (26) qui est poussée dans la section creuse de moulage, forme une cavité dans la matière à mouler plastique contenue dans ladite section creuse de moulage.

10. Procédé selon l'une quelconque des revendications précédentes, **caractérisé en ce que** la matière à mouler plastique liquide du premier plastique (26) injectée est une matière à mouler plastique qui comporte des fibres de renforcement.

11. Procédé selon l'une quelconque des revendications précédentes, **caractérisé en ce que** la préforme (21) est préchauffée avant l'injection de la matière à mouler plastique du premier plastique (26) dans ladite préforme (21).

12. Procédé selon la revendication 11, **caractérisé en ce que** l'outil de moulage (1) est chauffé et que la préforme (21) est préchauffée dans la cavité de moulage (2).

13. Procédé selon la revendication 11 ou 12, **caractérisé en ce qu'**un troisième fluide chauffé est introduit dans la préforme (21) pour chauffer ladite préforme (21).

14. Procédé selon l'une quelconque des revendications précédentes, **caractérisé en ce qu'**une matière à mouler plastique liquide d'un troisième plastique est injectée depuis l'extérieur sur la préforme par un deuxième injecteur de matière plastique disposé sur l'outil de moulage (1).

15. Procédé selon la revendication 14, **caractérisé en ce que** l'injection de la matière à mouler plastique liquide du troisième plastique (27) dans l'outil de moulage (1) s'effectue après l'injection de la matière à mouler plastique liquide du premier plastique (26).

16. Procédé selon la revendication 14, **caractérisé en ce que** l'injection de la matière à mouler plastique liquide du troisième plastique (27) dans l'outil de moulage (1) s'effectue avant l'injection de la matière à mouler plastique liquide du premier plastique (26).

17. Procédé selon l'une des revendications 14 à 16, **caractérisé en ce que** le troisième plastique (27) est différent du premier plastique (26).

18. Procédé selon l'une des revendications 14 à 16, **caractérisé en ce que** le troisième plastique (27) est identique au premier plastique (26).

19. Procédé selon l'une quelconque des revendications précédentes, **caractérisé en ce que** la matière à mouler plastique liquide du premier plastique (26) est d'abord injectée dans la cavité de préforme (23) à une première pression p₁ jusqu'à ce que la cavité de préforme (23) soit remplie de la matière à mouler plastique liquide du premier plastique (26), que l'injection de la matière à mouler plastique liquide du premier plastique (26) se poursuit ensuite à une deuxième pression p₂ où p₂ > p₁, la préforme (21) se transformant en ladite pièce.

20. Procédé selon la revendication 19, **caractérisé en ce que** p₂ est au moins deux fois plus élevée que p₁, de préférence au moins dix fois plus élevée et de manière tout particulièrement préférée au moins cinquante fois plus élevée que p₁.
